# EUROPEAN PATENT APPLICATION

(11) **EP 4 365 830 A1**
(43) Date of publication of application: **08.05.2024**
(21) Application number: 21948472.2
(22) Date of filing: 16.09.2021
(51) Int. Cl.: G06T 7/00

(54) **INFORMATION PROCESSING DEVICE, INFORMATION PROCESSING METHOD, AND INFORMATION PROCESSING PROGRAM**

(30) Priority: 28.06.2021 US 202163215699 P
(71) Applicant: Sony Group Corporation, Tokyo 108-0075 (JP)
(72) Inventor: YAMAMOTO, Yuki, Tokyo 108-0075 (JP); TAKAYANAGI, Takayoshi, Tokyo 108-0075 (JP); AOYAMA, Kazumi, Tokyo 108-0075 (JP)
(74) Representative: MFG Patentanwälte Meyer-Wildhagen Meggle-Freund Gerhard PartG mbB
(86) International application number: PCT/JP2021/034084
(87) International publication number: WO 2023/276169

(57) **Abstract**

[Object] To detect an occluded object.

[Solving Means] An information processing apparatus includes: a determination unit that determines that a first object has been detected by a detection model from a first image included in a series of time-series images, the first object having not been detected from one or more second images that are included in the time-series images and chronologically earlier than the first image; a tracking unit that extracts, from the one or more second images, the first object that has been occluded by a second object under a predetermined condition; a labeling unit that adds a label to the first object extracted from the one or more second images; a learning unit that learns the one or more second images including the first object to which the label is added; an update unit that updates the detection model on the basis of a learning result of the learning unit; and a detection unit that detects, from a third image, a third object occluded under the predetermined condition by executing the updated detection model.

## Description

### Technical Field

The present disclosure relates to an information processing apparatus, an information processing method, and an information processing program that detect an object from an image.

### Background Art

A technology for detecting an object present in an environment from an image obtained by imaging the environment has been known.

### Citation List

### Patent Literature

Patent Literature 1: Japanese Patent Application Laid-open No. 2013-152537

### Disclosure of Invention

### Technical Problem

In the case where an object in front occludes (hides) an object behind, it is difficult to detect the occluded object behind.

In this regard, in accordance with Patent Literature 1, in the case where a target object is detected from an input image and it is determined that at least part of the target object is hidden by the foreground object, a portion of the target object, which is not hidden by the foreground object, is estimated and the detection result of the target object is corrected on the basis of the estimation result (paragraph 0010). This aims to track a target object regardless of the state of the target object (paragraph 0009).

Patent Literature 1 aims to track a detected target object itself. Conversely, for example, in the case where most of an object is hidden by a foreground object and cannot be detected, this object cannot be tracked.

In view of the circumstances as described above, it is an object of the present disclosure to detect an occluded object. Solution to Problem

An information processing apparatus according to an embodiment of the present disclosure includes:
a determination unit that determines that a first object has been detected by a detection model from a first image included in a series of time-series images, the first object having not been detected from one or more second images that are included in the time-series images and chronologically earlier than the first image;
a tracking unit that extracts, from the one or more second images, the first object that has been occluded by a second object under a predetermined condition;
a labeling unit that adds a label to the first object extracted from the one or more second images;
a learning unit that learns the one or more second images including the first object to which the label is added;
an update unit that updates the detection model on a basis of a learning result of the learning unit; and
a detection unit that detects, from a third image, a third object occluded under the predetermined condition by executing the updated detection model.

While the first object occluded under the predetermined condition could not be detected by the detection model before the update, the third object occluded under the same conditions can be detected by the detection model after the update.

The label may include information for identifying a class and information for identifying an instance, and
a class of the first object and a class of the third object may be the same.

While the occluded first object could not be detected by the detection model before the update, the occluded third object of the same class can be detected by the detection model after the update.

The information processing apparatus may further include a manipulator that operates the third object detected by the detection unit.

While the first object occluded under the predetermined condition could not be detected by the detection model before the update, the third object of the same class occluded under the same conditions can be detected and operated by the detection model after the update.

The information processing apparatus may further include an action generation unit that moves the second object occluding the first object in the one or more second images to allow the first object to be detectable from the first image.

This embodiment is also applicable in the context where when the manipulator has moved the second object, the first object has happened to become detectable. Meanwhile, when the action generation unit intentionally moves the second object in front to allow the first object behind to be detectable, it is possible to collect label data more efficiently.

The action generation unit may further move the second object to occlude the first object in the one or more second images.

This embodiment is also applicable in the context where when the manipulator has moved the second object, the first object has happened to be occluded. Meanwhile, when the action generation unit intentionally moves the second object in front to occlude the first object behind, it is possible to collect label data more efficiently.

The action generation unit may repeat moving one or more second objects to occlude one or more first objects and allow one or more first objects to be detectable.

When the action generation unit combines the method of allowing the object to be detectable and the method of occluding the object, an even higher learning effect can be expected.

The action generation unit may
physically move the second object using the manipulator, or
virtually move the second object using a simulator.

The action generation unit may perform fine tuning (construct a new model reusing part of an existing model) in a real environment using the manipulator, by using a model learned in the simulator.

The information processing apparatus may further include an imaging unit that includes an image sensor and generates the series of time-series images.

This embodiment is also applicable to an information processing apparatus (robot) that includes an imaging unit and a manipulator and to an information processing apparatus that does not include an imaging unit and a manipulator.

The information processing apparatus may further include a reinforcement learning unit that realizes the action generation unit by reinforcement learning.

An information processing method according to an embodiment of the present disclosure includes, by executing an information processing program by an information processing apparatus:
determining that a first object has been detected by a detection model from a first image included in a series of time-series images, the first object having not been detected from one or more second images that are included in the time-series images and chronologically earlier than the first image;
extracting, from the one or more second images, the first object that has been occluded by a second object under a predetermined condition;
adding a label to the first object extracted from the one or more second images;
learning the one or more second images including the first object to which the label is added;
updating the detection model on a basis of a learning result; and
detecting, from a third image, a third object occluded under the predetermined condition by executing the updated detection model.

An information processing program according to an embodiment of the present disclosure causes a control circuit of an information processing apparatus to operate as:
a determination unit that determines that a first object has been detected by a detection model from a first image included in a series of time-series images, the first object having not been detected from one or more second images that are included in the time-series images and chronologically earlier than the first image;
a tracking unit that extracts, from the one or more second images, the first object that has been occluded by a second object under a predetermined condition;
a labeling unit that adds a label to the first object extracted from the one or more second images;
a learning unit that learns the one or more second images including the first object to which the label is added;
an update unit that updates the detection model on a basis of a learning result of the learning unit; and
a detection unit that detects, from a third image, a third object occluded under the predetermined condition by executing the updated detection model.

### Brief Description of Drawings

[Fig. 1] Fig. 1 shows an example of appearance of an information processing apparatus according to an embodiment of the present disclosure.
[Fig. 2] Fig. 2 shows a hardware configuration of the information processing apparatus.
[Fig. 3] Fig. 3 shows a functional configuration of the information processing apparatus.
[Fig. 4] Fig. 4 shows a first operation flow of the information processing apparatus.
[Fig. 5] Fig. 5 schematically shows an example of a series of time-series images.
[Fig. 6] Fig. 6 shows a second operation example of the information processing apparatus.

### Mode(s) for Carrying Out the Invention

An embodiment of the present disclosure will be described below with reference to the drawings.

### 1. Overview of information processing apparatus

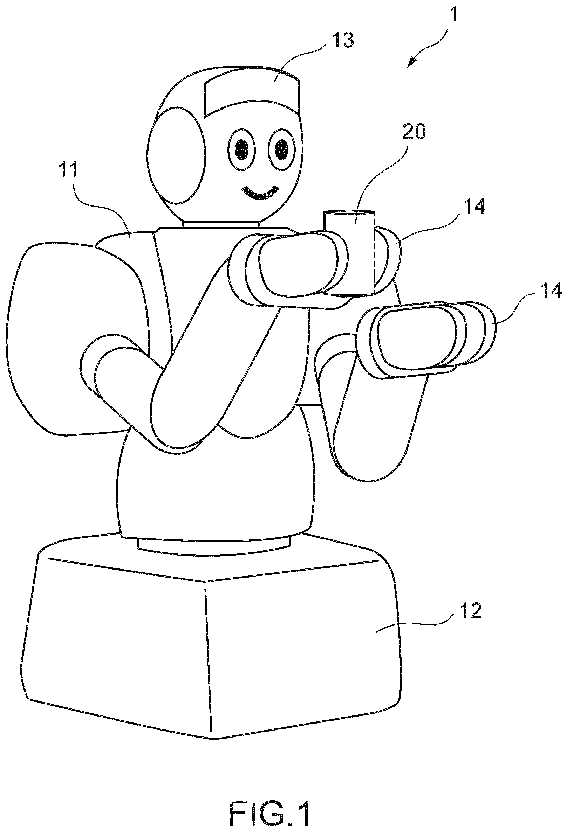

Fig. 1 shows an example of appearance of an information processing apparatus according to an embodiment of the present disclosure.

An information processing apparatus 1 includes a body 11, a moving mechanism 12 provided to the body 11, an imaging unit 13, and one or more manipulators 14. The information processing apparatus 1 is, for example, an autonomous mobile humanoid robot.

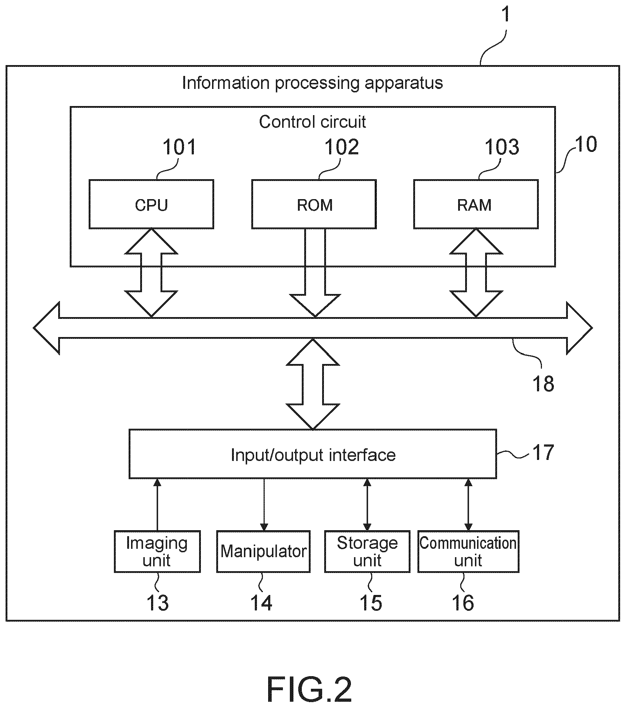

The body 11 contains the control circuit 10 (Fig. 2). The moving mechanism 12 includes a plurality of tires or a plurality of legs and an actuator or the like for driving them, autonomously moves in the environment. The imaging unit 13 includes an image sensor and images the environment to generate a series of time-series images. The manipulators 14 each include a rotatable arm with one or more hinges and a hand that is provided at the tip of the arm and capable of holding and operating an object 20. One or more manipulators 14 are provided, and the two manipulators 14, 14 are provided in this example. A single manipulators 14 will be described unless otherwise specified.

For example, the information processing apparatus 1 autonomously moves in the environment using the moving mechanism 12, detects the object 20 present in the environment from the image generated by the imaging unit 13, and operates the object 20 by the manipulator 14 (e.g., picks up an object and puts it away, picks up an object and hands it to a user, or presses a switch button). Typically, the information processing apparatus 1 is used not in an environment where objects are placed in an orderly manner in accordance with rules (e.g., a belt conveyor in a factory) but in an environment where objects are not placed in accordance with rules (e.g., indoors at home, inside facilities such as nursing care facilities, disaster sites, or accident sites), but the present technology is not limited thereto.

The information processing apparatus 1 is typically capable of using, but not limited to, instance segmentation (technology for dividing a region for each object) as a technology for detecting an object from an image. The information processing apparatus 1 may use object localization (object detection), semantic segmentation (technology for classifying classes of objects), panoptic segmentation (technology for executing both semantic segmentation and instance segmentation), or the like. Specifically, the information processing apparatus 1 only needs to use a detection technology for assigning an instance ID to each object, such as instance segmentation, object localization, and panoptic segmentation.

The concept of this embodiment will be described. For example, in a detection technology such as instance segmentation, typically, the detection accuracy of an object that is not occluded (hidden) is high and the detection accuracy of an object that is partially occluded is low. For this reason, typically, the information processing apparatus cannot detect an object behind, which is partially occluded by an object in front, with high accuracy, and thus cannot operate the object behind. In order to operate the object behind, the information processing apparatus detects an object in front, which is not occluded, from an image obtained by imaging the environment, moves the detected object in front with the manipulator, exposes and detects most of the object behind, and then operates the detected object with the manipulator.

Incidentally, once humans can recognize an object, they can recognize, even if part of an object of the same class (type) is occluded in another situation after that, that the object is an object of the same class. Meanwhile, in a detection technology such as instance segmentation, even if most of an object is exposed and detected with high detection accuracy, when part of an object of the same class is occluded in another situation after that, the object cannot be detected with high accuracy and thus cannot be operated even if it is an object of the same class.

In this regard, in this embodiment, in the case where a new object is detected from an image, the information processing apparatus 1 tracks back a series of images (frames) chronologically earlier than the image, adds a label to the same object included in the series of images (i.e., the object that has not been detected because it is partially occluded), and learns the series of images. This autonomously improves the detection accuracy of an object that is partially occluded, and aims to detect, with high accuracy, an object of the same class as that of the object that was once detected with high accuracy even if it is partially occluded.

### 2. Hardware configuration of information processing apparatus

Fig. 2 shows a hardware configuration of an information processing apparatus.

The information processing apparatus 1 includes the control circuit 10, the imaging unit 13, the manipulator 14, a storage unit 15, and a communication unit 16. The imaging unit 13, the manipulator 14, the storage unit 15, and the communication unit 16 are connected to the control circuit 10 via an input/output interface 17 and a bus 18.

The control circuit 10 includes a CPU 101, a ROM 102, and a RAM 103. The storage unit 15 is a large-capacity non-volatile storage device such as an HDD and an SSD. The communication unit 16 is a communication interface for communicating with an external device via a network.

### 3. Functional configuration of information processing apparatus

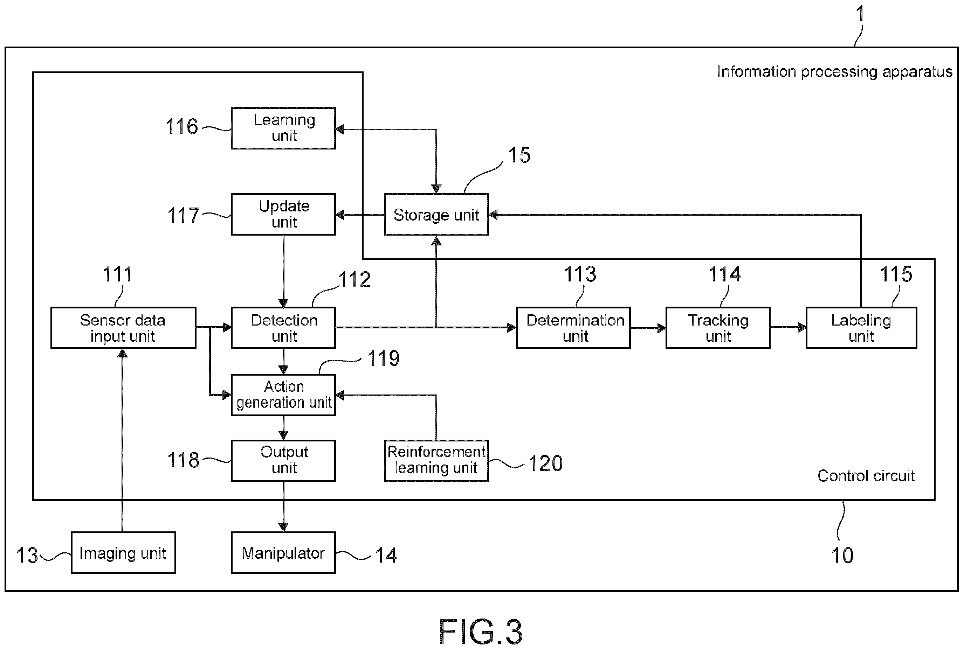

Fig. 3 shows a functional configuration of an information processing apparatus.

In the control circuit 10 of the information processing apparatus 1, the CPU 101 loads an information processing program stored in the ROM 102 into the RAM 103 and executes the program, thereby operating as a sensor data input unit 111, a detection unit 112, a determination unit 113, a tracking unit 114, a labeling unit 115, a learning unit 116, an update unit 117, an output unit 118, an action generation unit 119, and a reinforcement learning unit 120.

### 4. Operation flow of information processing apparatus

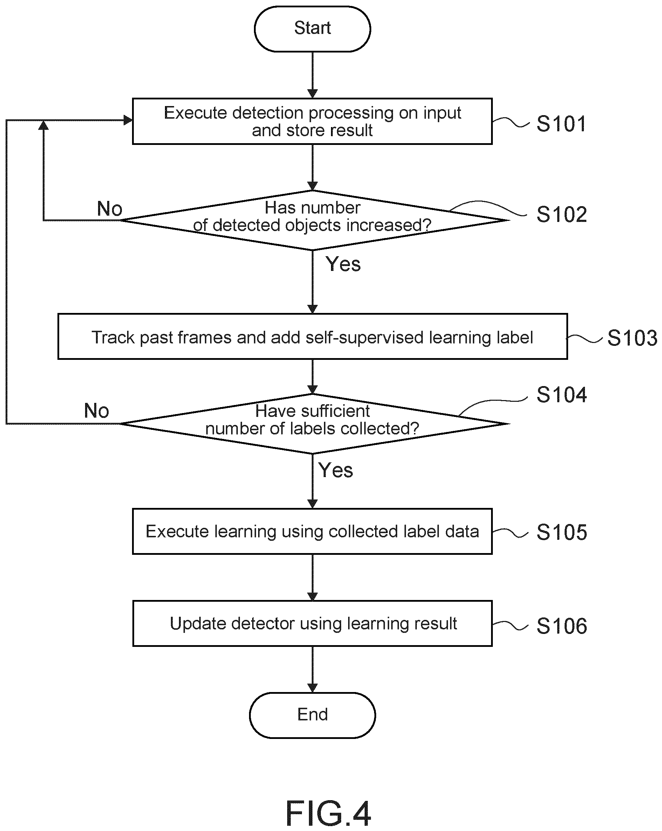

Fig. 4 shows a first operation flow of an information processing apparatus.

The imaging unit 13 continues to image the environment using an image sensor to continue to generate a series of time-series images. The sensor data input unit 111 inputs the series of time-series images generated by the imaging unit 13 to the detection unit 112 and stores them in the storage unit 15. In the present disclosure, the "image" means a frame and the series of time-series images mean a collection of frames constituting a moving image.

The detection unit 112 executes a detection model on each image included in the series of time-series images input from the sensor data input unit 111 to detect an object from each image. The detection model is, for example, a detection model using instance segmentation but is not limited thereto and may be a detection model using object localization, panoptic segmentation, or the like. The detection unit 112 stores the detection result in the storage unit 15 (Step S101). The detection result includes at least the number of detected objects and an object ID for uniquely identifying each object.

The determination unit 113 reads the detection result from the storage unit 15, and determines whether or not the number of objects detected from a specific image included in the series of time-series images has increased more than the number of objects detected from the immediately previous image (frame) (Step S102).

The phrase that the number of objects has increased (StepS102, Yes) means that a new object (first object) has been detected from a specific image (first image) included in a series of time-series images, the first object having not been detected from one or more images (second images) that are included in the time-series images and chronologically earlier than the specific image (first image).

Hereinafter, the newly detected object will be referred to as a "first object" and an image from which the first object has been detected will be referred to as a "first image". One or more images from which the first object has not been detected, which are chronologically earlier than the first image, will be referred to as a "second image(s)", and an object that occludes the first object under a predetermined condition in the second image (i.e., present in front of the first object) will be referred to as a "second object". In the present disclosure, the "predetermined condition" means a condition that occludes part of the first object to make the first object undetectable. Examples of the "predetermined condition" include occluding a predetermined percentage or more of the first object and occluding a characteristic part of the first object.

The case where the number of objects increases is, for example, a case where the second object occluding the first object is moved by some means (e.g., by the manipulator 14, held by a person in their hand, or the second object itself autonomously moves), most of the first object is exposed to be detectable, and the first object is detected. Alternatively, when the first object is hidden by shadows, most of the first object is exposed to be detectable due to illumination changes, and thus the first object is detected in some cases. In the present disclosure, the concept of occlusion in a broad sense includes not only physical occlusion but also such hiding due to shadows.

When the determination unit 113 determines that the number of objects has increased (Step S102, Yes), the tracking unit 114 tracks back one or more second images in chronological order from the first image, and extracts the first object occluded by the second object under the predetermined condition from the one or more second images. Specifically, the tracking unit 114 determines the difference between the object ID included in the detection result of the first image and the object ID included in the detection result of the second image. The object ID that is not included in the detection result of the second image and is included in the detection result of the first image is the object ID of the object newly detected from the first image. The tracking unit 114 aligns the one or more second images with the first image, tracks back the one or more second images in chronological order from the first image, and extracts the first object. The tracking unit 114 assigns an object ID to the first object extracted from the one or more second images.

The labeling unit 115 adds a label to the first object extracted from the one or more second images and stores the label in the storage unit 15 (Step S103). The label is self-supervised learning label. In the case where the detection unit 112 uses, for example, instance segmentation as a detection technology, the label includes information for identifying classes (types) and information for identifying instances (individuals in the class). The class and instance indicated by the label of the first object extracted from the second image are the same as the class and instance of the first object detected from the first image. In other words, the labeling unit 115 creates the label of the first object extracted from the second image on the basis of the class and instance of the first object detected from the first image. The label is a self-supervised learning label.

Note that the tracking unit 114 only needs to track the one or more second images by using, for example, basic template matching or a convolutional neural network (CNN) model learned in advance by unsupervised learning.

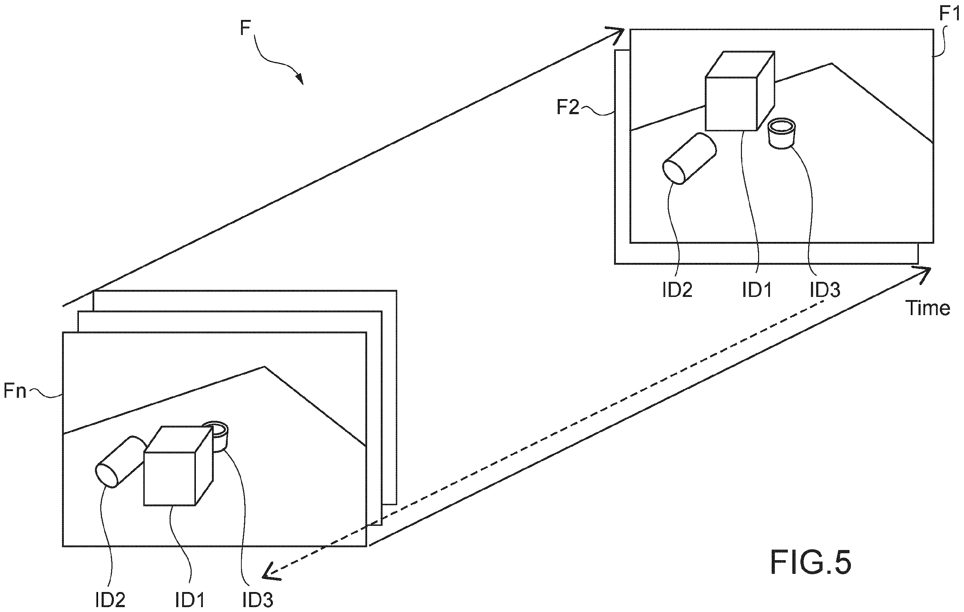

Fig. 5 schematically shows an example of a series of time-series images.

A specific example of the operations of Step S101 to Step S103 will be described. The detection unit 112 detects three objects from a first image F1 included in a series of time-series images F. In this case, the detection unit 112 stores, as the detection result, the number of detected objects (3) and object IDs for uniquely identifying each object (ID1, ID2, and ID3) in the storage unit 15 (Step S101).

The determination unit 113 determines whether or not the number of objects (3) detected from the first image F1 included in the series of time-series images F has increased more than the number of objects detected from a second image F2 that is the immediately previous image (Step S102). In this example, the determination unit 113 determines that the number of objects(3) detected from the first image F1 has increased more than the number of objects (2) detected from the immediately previous second image F2 (StepS102, Yes). In this example, for example, when the manipulator 14 (not shown in Fig. 5) has moved the second object (ID1) and thus the first object (ID3) is detected, the number of objects increases.

The tracking unit 114 aligns one or more second images F2 to Fn with the first image F1, tracks back the one or more second images F2 to Fn in chronological order from the first image F1, and extracts the first object from the one or more second images F2 to Fn. Specifically, the tracking unit 114 determines the difference between the object ID (ID1, ID2, ID3) included in the detection result of the first image F1 and the ID (ID1, ID2) included in the detection result of the second images F2 to Fn. The object ID (ID3) that is not included in the detection result of the second images F2 to Fn and is included in the detection result of the first image F1 is the object ID of the object newly detected from the first image F1. The tracking unit 114 tracks back the one or more second images F2 to Fn in chronological order from the first image F1 (broken line arrow in the figure) and extracts the first object. The tracking unit 114 assigns the object ID (ID3) to the first object extracted from the one or more second images F2 to Fn.

The labeling unit 115 adds a label to the first object extracted from the one or more second images F2 to Fn and stores the label in the storage unit 15 (Step S103). The class (cup) and instance indicated by the label of the first object (ID3) extracted from the second images F2 to Fn are the same as the class (cup) and instance of the first object (ID3) detected from the first image F1.

The flowchart will be described again. The learning unit 116 determines whether or not the self-supervised learning labels stored in the storage unit 15 by the labeling unit 115 (Step S103) have been collected in a predetermined number or more (Step S104). The predetermined number is a number suitable for performing self-supervised learning. In the case where it is determined that the predetermined number or more of labels have been collected (Step S104, Yes), the learning unit 116 leans the one or more second images including the first object to which the label has been added by the labeling unit 115, and stores the learning result in the storage unit 15 (Step S105). Note that the learning unit 116 may be executed on the information processing apparatus 1 (robot) (Fig. 3), or may be executed on another calculation resource (not shown) other than the information processing apparatus 1 (robot). In other words, the learning unit 116 may be executed outside the control circuit 10 (Fig. 3) .

The update unit 117 updates, on the basis of the learning result of the learning unit 116 stored in the storage unit 15, the detection model to be executed by the detection unit 112 (Step S107).

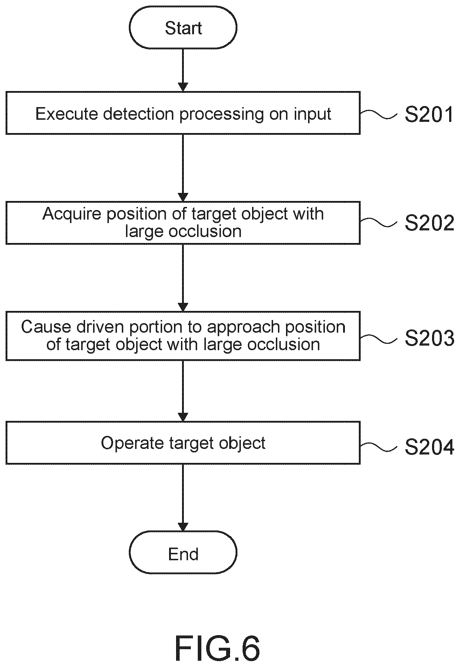

Fig. 6 shows a second operation flow of the information processing apparatus.

The imaging unit 13 continues to image the environment using an image sensor to continue to generate a series of time-series images. The sensor data input unit 111 inputs the series of time-series images generated by the imaging unit 13 to the detection unit 112.

The detection unit 112 executes the detection model updated by the update unit 117 on the image input from the sensor data input unit 111 and detects an object from the image. The detection unit 112 stores the detection result in the storage unit 15 (Step S201).

The detection unit 112 is capable of detecting, by executing the updated detection model, an object that could not be detected before the update. In other words, the detection unit 112 is capable of detecting, by executing the updated detection model, an object (third object) of the same class as that of the first object, which is occluded under a predetermined condition, from a specific image included in a series of time-series images (Step S202). In the example of Fig. 5, by using the updated detection model, the first object (ID3) can be detected from the second image Fn.

Hereinafter, the object occluded under the predetermined condition, which has been detected by executing the updated detection model, will be referred to as a "third object". The class of the first object and the class of the third object are the same. The "predetermined condition" is the same as the condition that occludes part of the first object to make the first object undetectable described above. In short, while the first object occluded under the predetermined condition could not be detected by the detection model before the update, the third object of the same class occluded under the same conditions can be detected by the detection model after the update.

Hereinafter, the image from which the third object has been detected will be referred to as a "third image". The third image may be included in the same image group as the series of time-series images including the first image and the one or more second images. In other words, the third image may be an image that is included in the same image group as that of the first image and chronologically later the first image. Alternatively, the third image may be included in a group of images taken in a situation different from that of the first image. In other words, the third image may be an image taken in a situation locationally and/or temporally different from that of the image group containing the first image.

The action generation unit 119 generates an action plan for the manipulator 14 to operate the third object detected by the detection unit 112. The output unit 118 generates, on the basis of the action plan generated by the action generation unit 119, a drive signal for operating the third object detected by the detection unit 112 with the manipulator 14 and outputs the generated drive signal to the manipulator 14 (Step S203). The manipulator 14 is driven in accordance with the drive signal from the output unit 118, approaches the third object, and operates the third object (Step S204).

While the first object occluded under the predetermined condition could not be detected by the detection model before the update, the third object of the same class occluded under the same conditions can be detected and operated by the detection model after the update.

### 5. Reinforcement learning

The above embodiment is also applicable in the context where when the manipulators 14 has moved the second object, the first object happens to have become detectable. Meanwhile, the reinforcement learning unit 120 may perform reinforcement learning in advance using the series of time-series images generated by the imaging unit 13, which has been stored in the storage unit 15 by the sensor data input unit 111, and the reinforcement learning unit 120 may realize the action generation unit 119 in advance. The action generation unit 119 generates an action for the manipulator 14 to occlude an object and an action for the manipulator 14 to make the object detectable. Note that the reinforcement learning unit 120 may be executed on the information processing apparatus 1 (robot) (Fig. 3), or may be executed on another calculation resource (not shown) other than the information processing apparatus 1 (robot). In other words, the reinforcement learning unit 120 may be executed outside the control circuit 10 (Fig. 3). Typically, the reinforcement learning unit 120 only needs to be completed in advance by simulation of the manipulator 14. When the action generation unit 119 intentionally moves the second object in front to allow the first object behind to be detectable, it is possible to collect self-supervised learning label data more efficiently. Conversely, when the action generation unit 119 intentionally moves the second object in front to occlude the first object behind, it is possible to collect label data more efficiently.

As described above, when the action generation unit 119 combines the method of allowing the object to be detectable and the method of occluding the object, an even higher learning effect can be expected. For example, the action generation unit 119 is capable of realizing reinforcement learning by earning, in a scene in which an object is to be detected, a reward when the object is detectable, and earning, in a situation in which an object is to be occluded, a reward when the number of detectable objects can be reduced.

Description will be made with the example of Fig. 5. In the one or more second images F2 to Fn, the second object (ID1) occludes the first object (ID3). This may be not because the second object (ID1) happens to be present in front of the first object (ID3)but the result that the action generation unit 119 has intentionally moved the second object (ID1) in front of the first object (ID3) by using the manipulator 14. Next, in the first image F1, the first object (ID3) is detectable. This may be not because the first object (ID3) happens to be expose but the result that the action generation unit 119 has intentionally moved the second object (ID1) in front of the first object (ID3) by using the manipulator 14. As described above, the action generation unit 119 may repeat, using the manipulator 14, moving the second object (ID1) to occlude the first object (ID3) and allow the first object (ID3) to be detectable.

Further, the target that the action generation unit 119 moves or makes detectable is not limited to the second object (ID1, box) and the first object (ID3, cup) in Fig. 5, and the action generation unit 119 may repeat moving one or more wide variety of second objects to occlude one or more first objects and allow the one or more first objects to be detectable.

Further, the action generation unit 119 may use the manipulator 14 to physically move the second object or use a simulator to virtually move the second object (simulation). The action generation unit 119 may perform fine tuning (construct a new model reusing part of an existing model) in a real environment using the manipulator 14, by using a model learned in the simulator.

During reinforcement learning, it is efficient to use a plurality of manipulators 14 (a manipulator to be used for occlusion, a manipulator to be used for performing detection and operation). Meanwhile, in theory, learning can be performed by using only one manipulators 14 to alternately learn the method of performing detection and operation and the method of performing occlusion.

Some method of finding an object can already be prepared as another technology. In this case, it only needs to fix the method of detecting and operating an object and realizing only the method of occluding an object by reinforcement learning. This is because the method of occluding an object is capable of increasing the number of images in which the object is occluded, in variety of ways.

The action generation unit 119 executes the method of moving the object that could be detected and occluding the object until the object can no longer be detected (method of occluding an object). Further, the action generation unit 119 executes the method of moving an occluded object behind or an object in front occluding the object behind to allow the object behind to be detectable (method of detecting and operating an object). The action generation unit 119 is capable of collecting various patterns of images by repeating these two methods a plurality of times. The learning unit 116 only needs to add the above-mentioned self-supervised learning label to the collected images and learn the images.

The advantage of the reinforcement learning unit 120 is that a plurality of (many) images including an image in which an object is detectable and an image in which an object is occluded can be obtained. Therefore, it can be expected that overfitting will be less likely to occur as compared with the case where learning is performed on a limited number of images.

Meanwhile, this embodiment is effective even in the case where such a method of allowing an object to be detectable or occluding and object using reinforcement learning cannot be realized due to some kind of restriction. For example, it is possible to partially update the weight of the convolutional neural network by adjusting the learning rate or partially fixing the weight of the convolutional neural network constituting a detector. By setting the weight of the convolutional neural network to an appropriate value and sequentially performing learning on a small amount of data, it is possible to achieve the desired learning effect.

This embodiment is also applicable to an information processing apparatus(a simulator, various dedicated computers, various end-user computers, a wearable device, or the like) that does not include the imaging unit 13 and the manipulators 14.

The present disclosure may also have the following configurations.
(1) An information processing apparatus, including:
   a determination unit that determines that a first object has been detected by a detection model from a first image included in a series of time-series images, the first object having not been detected from one or more second images that are included in the time-series images and chronologically earlier than the first image;
   a tracking unit that extracts, from the one or more second images, the first object that has been occluded by a second object under a predetermined condition;
   a labeling unit that adds a label to the first object extracted from the one or more second images;
   a learning unit that learns the one or more second images including the first object to which the label is added;
   an update unit that updates the detection model on a basis of a learning result of the learning unit; and
   a detection unit that detects, from a third image, a third object occluded under the predetermined condition by executing the updated detection model.
(2) The information processing apparatus according to (1) above, in which
   the label includes information for identifying a class and information for identifying an instance, and
   a class of the first object and a class of the third object are the same.
(3) The information processing apparatus according to (2) above, further including
   a manipulator that operates the third object detected by the detection unit.
(4) The information processing apparatus according to any one of (1) to (3) above, further including
   an action generation unit that moves the second object occluding the first object in the one or more second images to allow the first object to be detectable from the first image.
(5) The information processing apparatus according to (4) above, in which
   the action generation unit further moves the second object to occlude the first object in the one or more second images.
(6) The information processing apparatus according to (5) above, in which
   the action generation unit repeats moving one or more second objects to occlude one or more first objects and allow one or more first objects to be detectable.
(7) The information processing apparatus according to any one of (4) to (6) above, in which
   the action generation unit
   physically moves the second object using the manipulator, or
   virtually moves the second object using a simulator.
(8) The information processing apparatus according to any one of (1) to (7) above, further including
   an imaging unit that includes an image sensor and generates the series of time-series images.
(9) The information processing apparatus according to any one of (4) to (7) above, further including
   a reinforcement learning unit that realizes the action generation unit by reinforcement learning.
(10) An information processing method, including, by executing an information processing program by an information processing apparatus:
   determining that a first object has been detected by a detection model from a first image included in a series of time-series images, the first object having not been detected from one or more second images that are included in the time-series images and chronologically earlier than the first image;
   extracting, from the one or more second images, the first object that has been occluded by a second object under a predetermined condition;
   adding a label to the first object extracted from the one or more second images;
   learning the one or more second images including the first object to which the label is added;
   updating the detection model on a basis of a learning result; and
   detecting, from a third image, a third object occluded under the predetermined condition by executing the updated detection model.
(11) An information processing program that causes a control circuit of an information processing apparatus to operate as:
   a determination unit that determines that a first object has been detected by a detection model from a first image included in a series of time-series images, the first object having not been detected from one or more second images that are included in the time-series images and chronologically earlier than the first image;
   a tracking unit that extracts, from the one or more second images, the first object that has been occluded by a second object under a predetermined condition;
   a labeling unit that adds a label to the first object extracted from the one or more second images;
   a learning unit that learns the one or more second images including the first object to which the label is added;
   an update unit that updates the detection model on a basis of a learning result of the learning unit; and
   a detection unit that detects, from a third image, a third object occluded under the predetermined condition by executing the updated detection model.
(12) A non-transitory computer-readable recording medium that records an information processing program that causes a control circuit of an information processing apparatus to operate as:
   a determination unit that determines that a first object has been detected by a detection model from a first image included in a series of time-series images, the first object having not been detected from one or more second images that are included in the time-series images and chronologically earlier than the first image;
   a tracking unit that extracts, from the one or more second images, the first object that has been occluded by a second object under a predetermined condition;
   a labeling unit that adds a label to the first object extracted from the one or more second images;
   a learning unit that learns the one or more second images including the first object to which the label is added;
   an update unit that updates the detection model on a basis of a learning result of the learning unit; and
   a detection unit that detects, from a third image, a third object occluded under the predetermined condition by executing the updated detection model.

Although the embodiments and modified examples of the present technology have been described above, it goes without saying that the present technology is not limited to the above-mentioned embodiments and various modifications can be made without departing from the essence of the present technology.

### Reference Signs List

information processing apparatus 1
control circuit 10
imaging unit 13
manipulator 14
storage unit 15
sensor data input unit 111
detection unit 112
determination unit 113
tracking unit 114
labeling unit 115
learning unit 116
update unit 117
output unit 118
action generation unit 119
reinforcement learning unit 120

## Claims

1. An information processing apparatus, comprising:
a determination unit that determines that a first object has been detected by a detection model from a first image included in a series of time-series images, the first object having not been detected from one or more second images that are included in the time-series images and chronologically earlier than the first image;
a tracking unit that extracts, from the one or more second images, the first object that has been occluded by a second object under a predetermined condition;
a labeling unit that adds a label to the first object extracted from the one or more second images;
a learning unit that learns the one or more second images including the first object to which the label is added;
an update unit that updates the detection model on a basis of a learning result of the learning unit; and
a detection unit that detects, from a third image, a third object occluded under the predetermined condition by executing the updated detection model.

2. The information processing apparatus according to claim 1, wherein
the label includes information for identifying a class and information for identifying an instance, and
a class of the first object and a class of the third object are the same.

3. The information processing apparatus according to claim 2, further comprising
a manipulator that operates the third object detected by the detection unit.

4. The information processing apparatus according to claim 1, further comprising
an action generation unit that moves the second object occluding the first object in the one or more second images to allow the first object to be detectable from the first image.

5. The information processing apparatus according to claim 4, wherein
the action generation unit further moves the second object to occlude the first object in the one or more second images.

6. The information processing apparatus according to claim 5, wherein
the action generation unit repeats moving one or more second objects to occlude one or more first objects and allow one or more first objects to be detectable.

7. The information processing apparatus according to claim 4, wherein
the action generation unit
physically moves the second object using the manipulator, or
virtually moves the second object using a simulator.

8. The information processing apparatus according to claim 1, further comprising
an imaging unit that includes an image sensor and generates the series of time-series images.

9. The information processing apparatus according to claim 4, further comprising
a reinforcement learning unit that realizes the action generation unit by reinforcement learning.

10. An information processing method, comprising, by executing an information processing program by an information processing apparatus:
determining that a first object has been detected by a detection model from a first image included in a series of time-series images, the first object having not been detected from one or more second images that are included in the time-series images and chronologically earlier than the first image;
extracting, from the one or more second images, the first object that has been occluded by a second object under a predetermined condition;
adding a label to the first object extracted from the one or more second images;
learning the one or more second images including the first object to which the label is added;
updating the detection model on a basis of a learning result; and
detecting, from a third image, a third object occluded under the predetermined condition by executing the updated detection model.

11. An information processing program that causes a control circuit of an information processing apparatus to operate as:
a determination unit that determines that a first object has been detected by a detection model from a first image included in a series of time-series images, the first object having not been detected from one or more second images that are included in the time-series images and chronologically earlier than the first image;
a tracking unit that extracts, from the one or more second images, the first object that has been occluded by a second object under a predetermined condition;
a labeling unit that adds a label to the first object extracted from the one or more second images;
a learning unit that learns the one or more second images including the first object to which the label is added;
an update unit that updates the detection model on a basis of a learning result of the learning unit; and
a detection unit that detects, from a third image, a third object occluded under the predetermined condition by executing the updated detection model.
